# EUROPÄISCHE PATENTSCHRIFT

(11) **EP 2 673 168 B1**
(45) Veröffentlichungstag und Bekanntmachung des Hinweises auf die Patenterteilung: **14.03.2018**
(21) Anmeldenummer: 12700988.4
(22) Anmeldetag: 24.01.2012
(51) Int. Cl.: B60R 11/04

(54) **MONTAGEBAUGRUPPE ZUR VEREINFACHTEN MONTAGE AM FAHRZEUG**
MOUNTING ASSEMBLY FOR SIMPLIFIED ASSEMBLY ON THE VEHICLE
ENSEMBLE DE MONTAGE POUR LE MONTAGE SIMPLIFIÉ SUR UN VÉHICULE

(30) Priorität: 11.02.2011 DE 102011000683
(43) Veröffentlichungstag der Anmeldung: 18.12.2013
(60) Teilanmeldung: 17200238.8
(73) Patentinhaber: Huf Hülsbeck & Fürst GmbH & Co. KG, 42551 Velbert (DE)
(72) Erfinder: BARTHEL, Joachim, 45329 Essen (DE)
(74) Vertreter: Vogel, Andreas
(86) Internationale Anmeldenummer: PCT/EP2012/051053
(87) Internationale Veröffentlichungsnummer: WO 2012/107277

(56) Entgegenhaltungen:
- EP-A1- 0 076 578
- DE-A1-102006 039 192
- DE-A1-102006 048 373
- DE-A1-102008 010 966
- DE-A1-102008 046 453
- DE-A1-102009 008 281

## Beschreibung

Die Erfindung betrifft eine Vorrichtung einer Heckklappe für ein Fahrzeug, mit einer Kameraeinheit, die zur Bilderfassung des Außenbereiches eines Fahrzeugs dient, und einem Antrieb, wodurch die Kameraeinheit zwischen einem Ruhemodus und einem Betriebsmodus überführbar ist.

In der DE 10 2007 052 402.3 ist eine Kameraeinheit zur Bilderfassung eines Außenbereiches eines Fahrzeuges offenbart. Diese Kameraeinheit kann im Bereich des assistierten Einparkens von Kraftfahrzeugen zum Einsatz kommen.

Die Kameraeinheit erzeugt für den Fahrzeugfahrer auf einem Bildschirm innerhalb des Fahrzeugs ein Bild des Außenbereiches, insbesondere der Rückansicht des Kraftfahrzeuges, welches eine wesentliche Unterstützung für den Fahrer darstellt. Es ist bekannt, derartige Vorrichtungen mit einer Kameraeinheit an diversen Fahrzeugstellen anzubringen, wie z. B. an einem Stoßdämpfer, an einem Kotflügel, an einer Heckleiste usw.

In der DE 10 2009 008 281 A1 ist eine Kamera zur Bilderfassung des Außenbereiches des Kraftfahrzeuges mit einer Betätigungseinheit offenbart. In der DE 60 2004 003 255 T2 ist ferner eine Kameraeinheit offenbart, die über einen Antrieb verfügt, der ein Deckelelement zwischen einer Schließstellung und einer Offenstellung bewegen kann. In der Schließstellung des Deckelelementes wird die Kameraeinheit von der Außenwelt geschützt. Ferner ist es bekannt, dass der Antrieb sowohl die Kameraeinheit und/oder das Deckelelement bewegen kann. Feststehende Kameraeinheiten sind ebenfalls bekannt, bei denen lediglich das Deckelelement über den Antrieb bewegt wird.

Zudem weist das Fahrzeug in häufigen Anwendungsfällen Bedieneinheiten, insbesondere im nahen Bereich der Kameraeinheit auf, die zur Bedienung diverser Fahrzeugteile dienen können.

Nachteiligerweise hat sich gezeigt, dass die Montage der oben genannten Bauteile aufwendig ist.

Es ist Aufgabe der vorliegenden Erfindung, eine Vorrichtung der genannten Art zu schaffen, die die oben genannten Nachteile vermeidet, insbesondere eine Vorrichtung bereitgestellt wird, die eine vereinfachte Montage ermöglicht, wobei gleichzeitig eine zuverlässige Funktionsweise der montierten Bauteile am Fahrzeug gewährleistet ist.

Zur Lösung dieser Aufgabe wird eine Vorrichtung mit den Merkmalen des Anspruches 1 vorgeschlagen. In den abhängigen Ansprüchen sind bevorzugte Weiterbildungen ausgeführt.

Dazu ist erfindungsgemäß vorgesehen, dass die Vorrichtung eine Kameraeinheit aufweist, die zur Bilderfassung des Außenbereiches des Fahrzeuges dient. Zudem umfasst die Vorrichtung einen Antrieb, wodurch die Kameraeinheit zwischen einem Ruhemodus und einem Betriebsmodus überführbar ist, wobei in dem Ruhemodus die Kameraeinheit über ein Deckelelement geschützt vom Außenbereich ist und in dem Betriebsmodus eine Bilderfassung durch die Kameraeinheit durchführbar ist. Ferner ist eine Bedieneinheit vorgesehen, die zur Bedienung eines Fahrzeugteils dient. Zudem umfasst die erfindungsgemäße Vorrichtung einen Träger, in dem die Kameraeinheit angeordnet ist und der gleichzeitig als Gehäuse für die Kameraeinheit wirkt. Der Träger weist derartige Befestigungsschnittstellen auf, dass der Antrieb und die Bedieneinheit am Träger zuverlässig gehalten sind und eine gemeinsame Montagegruppe bilden, die am Fahrzeug befestigbar ist.

Die Besonderheit dieser Erfindung ist, dass an dem erfindungsgemäßen Träger sowohl die Kameraeinheit als auch der Antrieb und die Bedieneinheit angeordnet werden können und anschließend gemeinsam als Montagebaugruppe am Fahrzeug zu befestigen sind. Eine Vorkonfektionierung ist somit durchführbar, sodass bei der Montage am Fahrzeug der Zeitaufwand erheblich reduzierbar ist und gleichzeitig die Montagefreundlichkeit erhöht wird. Um die Kameraeinheit, den Antrieb und die Bedieneinheit entsprechend am Träger zu befestigen, weist der Träger entsprechende Befestigungsschnittstellen auf, die für einen zuverlässigen Halt der jeweiligen Bauteile während der Montage und natürlich im montierten Zustand der Gesamtvorrichtung sorgen. Ein weiterer Vorteil der Erfindung ist, dass die Montagebaugruppe lediglich von einer Seite des Fahrzeugs montierbar ist, im Gegensatz zum Stand der Technik, bei dem einige zu montierende Baugruppe beispielsweise von außen und die übrigen Bauteile von innen an das Fahrzeug montiert werden. Auch dieser erfindungsgemäße Unterschied trägt zur weiteren Montagefreundlichkeit bei. Durch die Erfindung steht der Antrieb mit der Kameraeinheit derart in Wirkverbindung, dass die Kameraeinheit zwischen einer Ruheposition, in der sich die Kameraeinheit in dem Ruhemodus befindet, und einer Betriebsposition bewegbar ist, in der sich die Kameraeinheit im Betriebsmodus befindet.

Der Antrieb kann sowohl mit der Kameraeinheit und/oder mit dem Deckelelement in Wirkverbindung stehen. Ebenfalls ist es denkbar, dass durch eine Bewegung der Kameraeinheit durch den Antrieb in einer definierten Position der Kameraeinheit in Richtung ihrer Betriebsposition die Kameraeinheit das Deckelelement aus seiner Schließstellung in die Offenstellung bewegt.

Zudem ist es denkbar, dass die Bedieneinheit ein vom Außenbereich des Fahrzeugs betätigbarer Taster ist, der insbesondere mit einer Ver- und Entriegelungseinheit der Heckklappe des Fahrzeugs verbunden ist. Der Taster kann beispielsweise ein elektrischer Taster sein, der zudem auch mechanisch arbeiten kann, bei dem über eine Betätigung Kontakte bewegt werden. Über eine Betätigung können Kontakte geschlossen werden, also miteinander in Berührung gebracht werden, wodurch eine Bedienung eines Fahrzeugteils ausgelöst werden kann. Die Bedieneinheit kann als Folientaster ausgeführt sein, die Leiterbahnen aus Folien aufweist. Über eine Betätigung dieses Tasters erfolgt eine Verbindung der übereinander liegenden Leiterbahnen und somit ein Kontakt, der zum Schalten bzw. zur Bedienung eines Fahrzeugteils dient. Der Taster kann ferner ein Sensortaster sein, der die Reaktion auf Druck oder Annäherung detektiert. Beispielsweise ist ein Halltaster, ein kapazitiver Taster, ein Piezotaster etc. denkbar. Die Ver- und Entriegelungseinheit kann beispielsweise ein Schloss sein, das dafür sorgt, dass die Heckklappe verriegelt und/oder entriegelt werden kann.

In einer weiteren die Erfindung verbessernden Maßnahme kann der Mechanismus derart ausgeführt sein, dass die Kameraeinheit auf einer Kreissegmentbahn zwischen der Ruheposition und der Betriebsposition bewegbar ist, wobei die Kreissegmentbahn zumindest teilweise um die Bedieneinheit verläuft. Da die Kameraeinheit zumindest teilweise um die Bedieneinheit verläuft, wird eine besonders Platz sparende Konstruktion der Gesamtvorrichtung erzielt.

Erfindungsgemäß weist der Mechanismus eine Achse auf, um die die Kameraeinheit bewegbar ist, wobei die Achse zur Standfläche des Fahrzeugs gerichtet ist. In der Regel ist jedoch die Achse schräg in einem definierten Winkel zur Standfläche des Fahrzeugs ausgerichtet. Im Gegensatz zum Stand der Technik, bei dem die Schwenkachse horizontal zur Standfläche des Fahrzeugs verläuft, kann durch die vorliegende Erfindung eine kompakte Bauweise erzielt werden.

In einer möglichen Ausführungsform der erfindungsgemäßen Vorrichtung können die Befestigungsschnittstellen an der Außenkontur des Trägers vorgesehen sein. Vorzugsweise ist der Antrieb und/oder die Bedieneinheit an der Außenkontur des Trägers befestigt. Innerhalb des Trägers, d. h. in einem Innenraum befindet sich die Kameraeinheit.

Ebenfalls ist es möglich, dass der Antrieb und/oder die Bedieneinheit kraftschlüssig und/oder formschlüssig, insbesondere über eine Rastverbindung und/oder Clipsverbindung am Träger befestigt ist/sind.

Vorzugsweise kann der Mechanismus zumindest teilweise innerhalb des Trägers angeordnet sein. Ebenfalls ist es möglich, dass der Mechanismus einen Schwenkarm aufweist, der die Kameraeinheit mit der Achse verbindet, wobei insbesondere der Schwenkarm L-artig ist und/oder eine abgewinkelte Erstreckung aufweist. Der L-artige Schwenkarm befindet sich hinter der Bedieneinheit, wobei der Schwenkarm an einer Seite an der Drehachse angelenkt ist. An der gegenüberliegenden Seite des Schwenkarms ist vorteilhafterweise die Kameraeinheit befestigt, wobei diese Seite des Schwenkarms seitlich zur Bedieneinheit angeordnet ist.

In einer die Erfindung verbessernden Maßnahme kann der Schwenkarm eine Aufnahme für die Kameraeinheit aufweisen und/oder Befestigungsmittel aufweisen, um die Kameraeinheit am Schwenkarm zu fixieren. Vorzugweise kann die Aufnahme und das Befestigungsmittel mit dem Schwenkarm ein gemeinsames monolithisches Bauteil bilden, wobei insbesondere die Aufnahme eine ringartige Öffnung ist, durch die sich zum Teil die Kameraeinheit erstreckt und das Befestigungsmittel ein Rastelement ist, das die Kameraeinheit zuverlässig in der Öffnung hält.

Zudem ist es denkbar, dass der Mechanismus ein Koppelelement mit einem daran angelenkten Mitnehmer aufweist, der drehfest mit dem Schwenkarm verbunden ist, wobei das Koppelelement durch den Antrieb bewegbar ist. Ferner kann vorgesehen sein, dass zwischen dem Koppelelement und dem Antrieb ein Kurbelelement mit einem Exzenter angeordnet ist, der am Koppelelement angreift.

Erfindungsgemäß kann ein Teil des Mechanismus innerhalb des Trägers angeordnet sein, insbesondere kann der Schwenkarm innerhalb des Trägers bewegbar angeordnet sein. Zudem ist es denkbar, dass ein Teil des Mechanismus außerhalb des Trägers angeordnet ist, insbesondere dass das Koppelelement und/oder der Mitnehmer und/oder das Kurbelelement sich außerhalb des Trägers befinden. Der Antrieb, der ein Drehantrieb sein kann, treibt das Kurbelelement an, welches um eine Rotationsachse sich dreht. Hierdurch wirkt der am Kurbelelement angeordnete Exzenter auf das Koppelelement, wobei das Koppelelement wiederum den Mitnehmer um die Achse verschwenkt, die gleichzeitig die Drehachse des Schwenkarms ist. Da der Mitnehmer drehfest mit dem Schwenkarm verbunden ist, erfolgt eine Bewegung der Kameraeinheit in ihre entsprechende Position. Hierbei ist der Mechanismus zur Bewegung der Kameraeinheit derart ausgeführt, dass die Kameraeinheit von der Ruheposition in die Betriebsposition um einen Winkel um die Achse verschwenkt, der geringer als 30° ist, vorzugsweise geringer ist als 20°. Die Kameraeinheit führt somit lediglich eine geringe Schwenkbewegung aus, welches vorteilhaft für die Kabelführung der Kameraeinheit ist, die aus dem Träger in den Fahrzeugraum führt.

In einer möglichen Ausführungsform der Erfindung kann ein Stabelement das Deckelelement mit dem Schwenkarm und/oder mit der Kameraeinheit verbinden, wobei das Stabelement am Deckelelement sowie am Schwenkarm und/oder an der Kameraeinheit beweglich angelenkt ist. Das Deckelelement bildet gleichzeitig die gemeinsame Montagebaugruppe, die an das Fahrzeug befestigt werden kann.

Ferner ist es vorgesehen, dass der Träger außenseitig Verriegelungselemente aufweist, die zur Sicherung der Montagebaugruppe am Fahrzeug dient. Das Verriegelungselement wirkt mit einem Gegenverriegelungselement zusammen, welches bei der Montage am Träger angeordnet wird, sodass ein Herausfallen und/oder Lösen der Montagebaugruppe vom Fahrzeug verhindert wird.

In einer weiteren Ausführungsform der Erfindung weist der Träger eine Öffnung auf, durch die die Kameraeinheit in ihrem Betriebsmodus sich zumindest teilweise erstreckt und/oder die Kameraeinheit in Richtung der Öffnung des Trägers gerichtet ist, um eine Bilderfassung des Außenbereiches des Fahrzeuges durchführen zu können. Vorteilhafterweise ist die Öffnung in Richtung Standfläche des Fahrzeugs gerichtet, sodass keine aufwendige Drainage notwendig ist. Bei jedem Öffnungsvorgang des Deckelelementes erfolgt eine Entwässerung etwaiger Feuchtigkeit, Wasserbestandteile aus dem Innenraum des Trägers.

Vorteilhafterweise kann die Kameraeinheit durch zwei Dichtungsebenen vom Außenbereich des Fahrzeugs abgedichtet sein. Ebenfalls ist es denkbar, dass eine erste Dichtungsebene zwischen dem Träger und dem Fahrzeug, insbesondere dem Fahrzeugblech liegt und eine zweite Dichtungsebene zwischen dem Deckelement und dem Träger liegt, wobei insbesondere die erste Dichtungsebene eine Doppeldichtung aufweist. Hierdurch wird eine zuverlässig Abdichtung des Innenraumes des Trägers vom Außenbereich des Fahrzeugs erzielt.

Die Aufgabe wird ferner durch den erfindungsgemäßen unabhängigen Verfahrensanspruch gelöst. Hierbei umfasst die Erfindung ein Verfahren zur Befestigung folgender Bauteile an einer Heckklappe eines Fahrzeuges:
- eine Kameraeinheit, die zur Bilderfassung des Außenbereiches eines Fahrzeuges dient,
- ein Antrieb, wodurch die Kameraeinheit zwischen einem Ruhemodus und einem Betriebsmodus überführbar ist, wobei in dem Ruhemodus die Kameraeinheit über ein Deckelelement geschützt vom Außenbereich ist und in dem Betriebsmodus eine Bilderfassung durch die Kameraeinheit durchführbar ist,
- eine Bedieneinheit, die zur Bedienung eines Fahrzeugteils dient.

Folgende Montageschritte sind erfindungswesentlich, wobei:
(1) ein Träger vorgesehen ist, an den die Kameraeinheit, der Antrieb, das Deckelelement und die Bedieneinheit befestigt werden und eine vorkonfektionierte Montagebaugruppe bilden,
(2) die Montagebaugruppe vom Außenbereich des Fahrzeuges durch eine Öffnung des Fahrzeuges in die zu montierende Stellung innerhalb des Fahrzeuges geführt wird und
(3) über eine mechanische Sicherung der zuverlässige Halt der Montagebaugruppe erzielt wird.

Weitere Vorteile, Merkmale und Einzelheiten der Erfindung ergeben sich aus der nachfolgenden Beschreibung, in der unter Bezugnahme auf die Zeichnungen ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein. Es zeigen:
- Fig. 1: eine dreidimensionale Ansicht der erfindungsgemäßen Vorrichtung mit einer Kameraeinheit, die sich in einem Ruhemodus befindet,
- Fig. 2: die Vorrichtung gemäß Figur 1, wobei die Kameraeinheit sich in einem Betriebsmodus befindet,
- Fig. 3: eine Explosionsdarstellung der wesentlichen Bauteile der erfindungsgemäßen Vorrichtung gemäß Figur 1,
- Fig. 4: die erfindungsgemäße Vorrichtung gemäß Figur 2 in einer anderen Ansicht,
- Fig. 5: die erfindungsgemäße Vorrichtung gemäß Figur 1 in einer anderen Ansicht,
- Fig. 6a: die erfindungsgemäße Vorrichtung gemäß Figur 1 in einem ersten Montageschritt,
- Fig. 6b: die erfindungsgemäße Vorrichtung gemäß Figur 1 in einem zweiten Montageschritt,
- Fig. 6c: die erfindungsgemäße Vorrichtung gemäß Figur 1 in einem dritten Montageschritt,
- Fig. 7: eine Detailansicht der erfindungsgemäßen Vorrichtung gemäß Figur 1 und
- Fig. 8: eine weitere Detailansicht der erfindungsgemäßen Vorrichtung gemäß Figur 1.

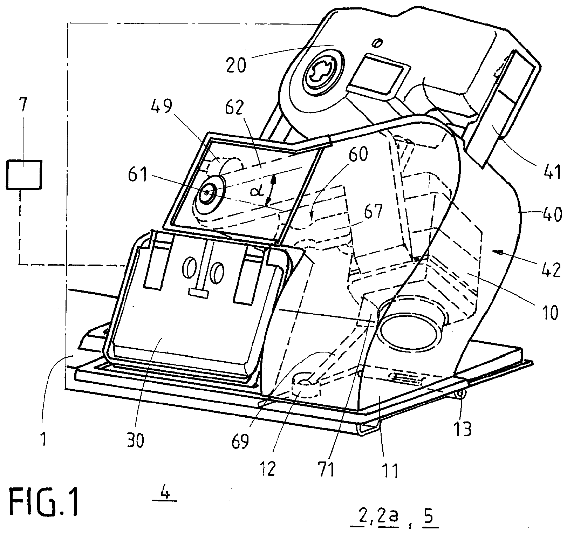

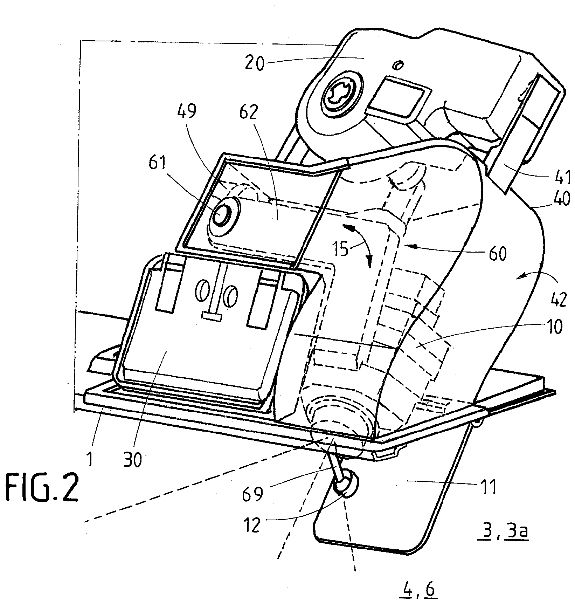

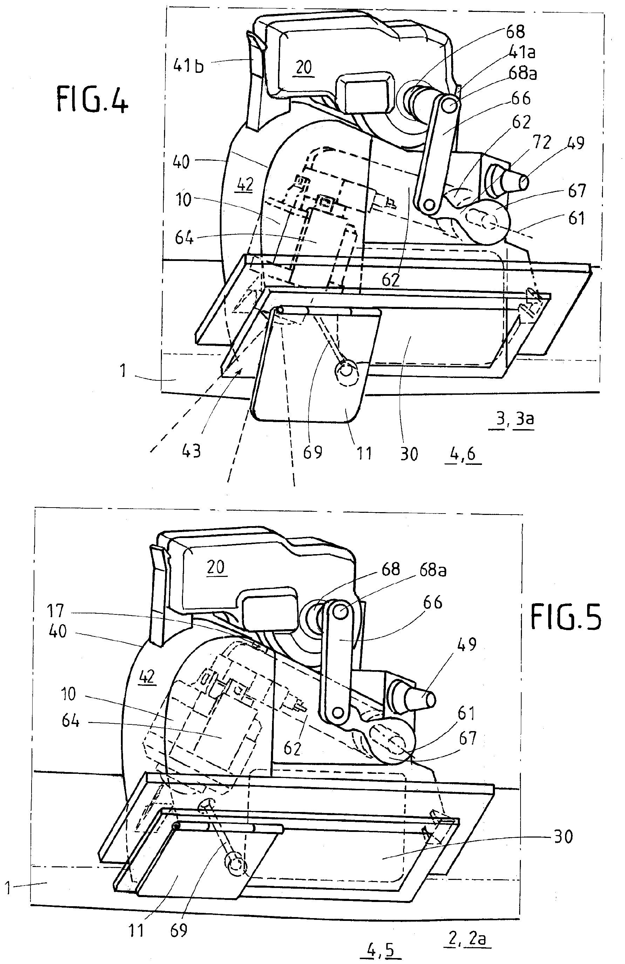

Die dargestellte Vorrichtung gemäß Figur 1 bis Figur 8 zeigt eine Kameraeinheit 10, die an einer Heckklappe 1 eines Fahrzeuges befestigt bzw. befestigbar ist. In Figur 1 und Figur 5 befindet sich die Kameraeinheit in ihrem Ruhemodus 2, und gleichzeitig in ihrer Ruheposition 2a. In Figur 2 und Figur 4 ist die Kameraeinheit 10 hingegen in ihrem Betriebsmodus 3 und somit in ihrer Betriebsposition 3a. In der Betriebsposition 3a kann eine Bilderfassung des Außenbereiches 4 des Kraftfahrzeuges erfolgen. Die Kameraeinheit 10 wird über einen Antrieb 20 angetrieben. In dem Ruhemodus 2 sowie in der Ruheposition 2a ist die Kameraeinheit 10 über ein Deckelelement 11 geschützt vom Außenbereich 4.

Zudem weist die erfindungsgemäße Vorrichtung eine Bedieneinheit 30 auf, die zur Bedienung eines Fahrzeugteils 7 dient. Das Fahrzeugteil 7 ist im vorliegenden Ausführungsbeispiel ein Schloss 7, das die Heckklappe 1 ent- bzw. verriegeln kann. Hierbei ist die Bedieneinheit 30 als Taster ausgeführt, der vom Benutzer beispielsweise manuell betätigt werden kann.

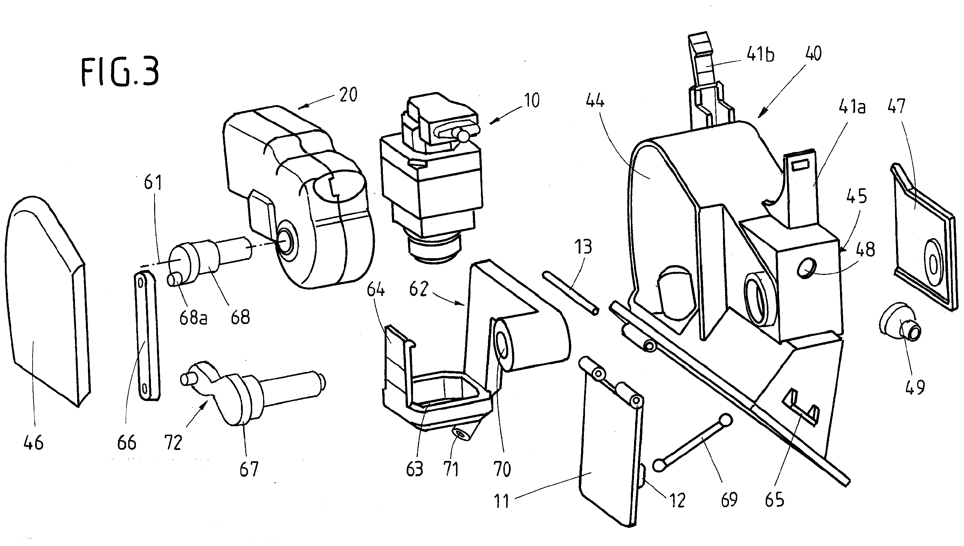

Wie aus dem Ausführungsbeispiel deutlich zu erkennen ist, ist ein Träger 40 vorgesehen, der als Gehäuse für die Kameraeinheit 10 wirkt. Die Kameraeinheit 10 ist in einem Innenraum 42 des Trägers 40 beweglich angeordnet. Der Träger 40 weist zudem Befestigungsschnittstellen 41 auf, an denen der Antrieb 20 befestigt werden kann, welches insbesondere in Figur 3 gezeigt ist. Die Befestigungsschnittstellen 41 sind an der Außenkontur des Trägers 40 angeordnet, wobei die erste Befestigungsschnittstelle 41a eine Rastöffnung aufweist, in die der Antrieb 20 mit einer Gegenraststelle eingreifen kann. Die zweite Befestigungsschnittstelle 41b weist hingegen einen Rastvorsprung auf, der in eine Einbuchtung des Antriebs 20 eingreift. Beide Befestigungsschnittstellen 41 sind des Weiteren der Kontur des Antriebs 20 angepasst, sodass ein zuverlässiger Halt des Antriebs 20 an der Außenkontur des Trägers 40 gewährleistet ist.

Die Bedieneinheit 30 ist an der gegenüberliegenden Seite am Träger 40 außenseitig befestigt. Die Befestigung kann ebenfalls über eine Rastverbindung und/oder Clipsverbindung erfolgen. Alternative Befestigungsmöglichkeiten, insbesondere eine stoffschlüssige Verbindung und/oder kraftschlüssige Verbindung und/oder formschlüssige Verbindung sind denkbar.

Zwischen dem Antrieb 20 und der Kameraeinheit 10 befindet sich ein Mechanismus 60, der für eine entsprechende Bewegung der Kameraeinheit 10 sowie dem Deckelelement 11 sorgt. Hierbei weist der Mechanismus 60 einen Schwenkarm 62 auf, der die Kameraeinheit 10 mit der Schwenkachse 61 verbindet. Hierbei ist der Schwenkarm 62 L-artig ausgeführt, wobei an einer Seite des Schwenkarms 62 die Achse 61 sich befindet. An der gegenüberliegenden Seite des Schwenkarms 62 ist eine Aufnahme 63 in Form einer Öffnung ausgebildet. Die Aufnahme 63 ist - wie in Figur 3 gut zu erkennen ist - ringartig ausgeführt, die zuverlässig die Kameraeinheit 10 hält. Zusätzlich weist der Schwenkarm 62 ein angeformtes Befestigungsmittel 64 in Form eines Rastelementes auf, welches die Kameraeinheit 10 in der montierten Lage am Schwenkarm 62 zuverlässig hält.

Zudem weist der Mechanismus 60 ein Koppelelement 66 mit einem daran angelenkten Mitnehmer 67 auf, der drehfest am Schwenkarm 62 befestigt ist. Gemäß des dargestellten Ausführungsbeispiels weist der Schwenkarm 62 eine Öffnung 70 auf, durch die der Mitnehmer 67 sich erstreckt und dort drehfest gehalten ist. Wie besonders Figur 3 und Figur 4 zeigt, ist zwischen dem Koppelelement 66 und dem Antrieb 20 ein Kurbelelement 68 mit einem Exzenter 68a angeordnet, wobei der Exzenter 68a durch eine Öffnung des Koppelelementes 66 sich erstreckt und dort zuverlässig gehalten ist.

Die Besonderheit des gezeigten Ausführungsbeispiels ist, dass ein Teil des Mechanismus 60 sich innerhalb des Trägers 40 befindet, wobei insbesondere der Schwenkarm 62 beweglich innerhalb des Innenraumes 42 des Trägers 40 sich befindet. Zudem ist ein Teil des Mechanismus 60 außerhalb des Trägers 40 angeordnet, damit die Kraftübertragung vom außen liegenden Antrieb 20 in den Innenraum 42 geleitet werden kann. Hierfür ist es erforderlich, dass das Koppelelement 66, der Mitnehmer 67 und das Kurbelelement 68 sich außerhalb des Trägers 40 befinden.

Ausgehend von der Ruheposition 2a der Kameraeinheit 10, die in Figur 5 gezeigt ist, erfolgt nun über den Antrieb 20 eine Drehbewegung bzw. Rotation des Kurbelelementes 68 im Uhrzeigersinn. Hierdurch drückt der Exzenter 68a das Koppelelement 66 nach unten, wodurch der Mitnehmer 67 gegen den Uhrzeigersinn um wenige Winkelgrade um die Achse 61 verschwenkt wird und in die Position gemäß Figur 4 gelangt. Auf diese Weise wird eine Krafteinwirkung auf den Schwenkarm 62 ausgeübt, der sich gemäß Figur 4 bzw. Figur 5 ebenfalls gegen den Uhrzeigersinn um die Achse 61 bewegt und gleichzeitig die Kameraeinheit 10 zur Öffnung 43 bewegt.

Wie insbesondere Figur 1, Figur 2 und Figur 7 verdeutlichen ist ein Stabelement 69 vorgesehen, dass das Deckelelement 11 mit dem Schwenkarm 62 verbindet. Hierbei ist das Stabelement 69 als Kugelstange ausgeführt, die an ihren beiden freien Enden jeweils kugelförmig ausgeführt ist. Diese beiden Enden sind jeweils in einer Kalotte 12 auf der Innenseite des Deckelelementes 11 sowie in einer Kalotte 71 des Schwenkarms 62 beweglich angelenkt. Die Kalotte 71 befindet sich im Bereich der Aufnahme 63 des Schwenkarm 62. Wenn nun der Schwenkarm 62 um seine Achse 61 bewegt wird und die Kameraeinheit 10 aus der Ruheposition 2a in die Betriebsposition 3a bewegt, drückt gleichzeitig der Schwenkarm 62 über das Stabelement 69 das Deckelelement 11 aus seiner Schließstellung 5 in die Offenstellung 6. Das Deckelelement 11 ist gemäß Figur 3 über eine Lagerwelle 13 drehbeweglich am Träger 40 verschwenkbar. Vorteilhafterweise ist das Deckelelement 11 federbelastet, sodass durch die Federbelastung eine Bewegung des Deckelelementes 11 in Richtung Schließstellung 5 unterstützt ist.

Wie insbesondere Figur 1 und Figur 2 bzw. Figur 4 und Figur 5 verdeutlichen, wird die Kameraeinheit 10 von der Ruheposition 2a in die Betriebsposition 3a um einen geringen Winkel α um die Achse 61 verschwenkt, der im vorliegenden Ausführungsbeispiel geringer ist als 30°. Um insbesondere den Schwenkarm 62 mit der Kameraeinheit 10 in den Innenraum 42 des Trägers 40 zu montieren, weist gemäß Figur 3 der Träger 40 eine Öffnung 44 und 45 auf, durch die die entsprechenden Bauteile in den Innenraum 42 gebracht werden können. Anschließend können diese Öffnungen 44, 45 durch zwei Deckel 46, 47 verschlossen werden. Zudem weist der Träger 40 einen Durchbruch 48 auf, durch den das nicht explizit dargestellte Kabelelement der Kameraeinheit 10 sich erstreckt.

Innerhalb des Durchbruches 48 ist ein Gummielement 49, insbesondere eine Tülle befestigt, um bei einer Bewegung der Kameraeinheit 10 das Kabelelement nicht unnötig zu beanspruchen.

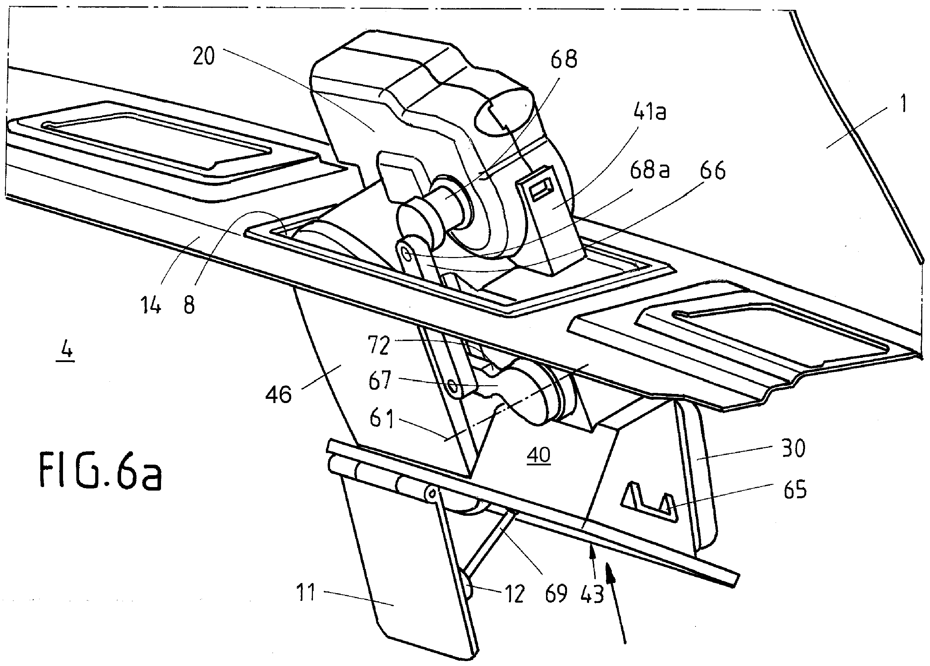

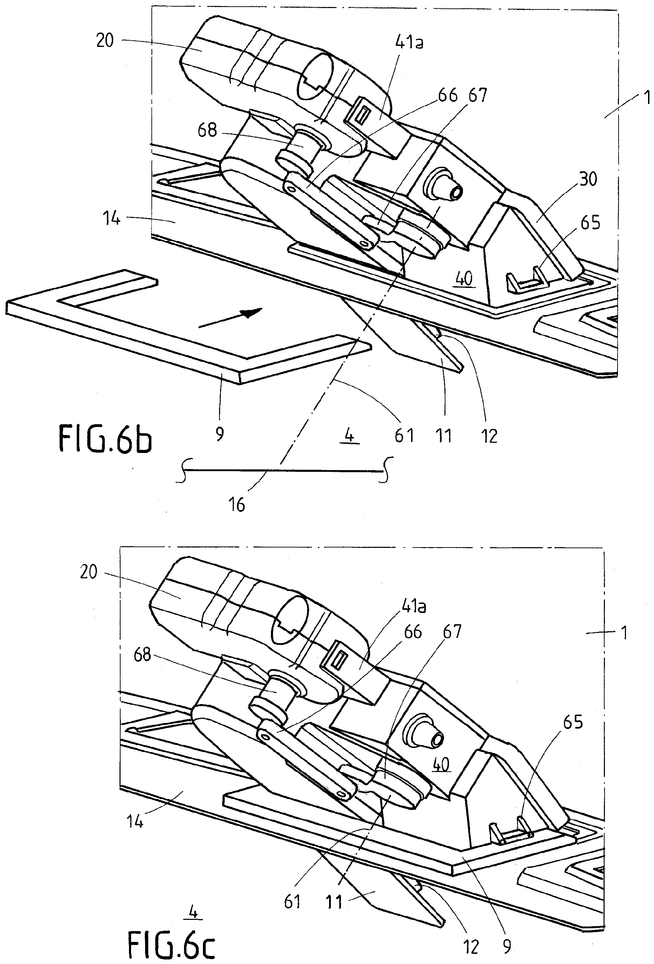

Gemäß Figur 6a bis 6c wird deutlich, dass der Träger 40 mit der Kameraeinheit 10, dem Antrieb 20, der Bedieneinheit 30 und dem Deckelelement 11 eine vorkonfektionierte Montagebaugruppe bilden, die durch eine Öffnung 8 der Heckklappe 1 als ein einheitliches Bauteil bzw. als gemeinsame Montagebaugruppe geführt wird. Anschließend wird in einem weiteren Montageschritt diese Montagebaugruppe über ein Verriegelungselement 65, welches vorsprungartig am Träger 40 außenseitig angeordnet ist, sicher an der Heckklappe 1 fixiert. Hierzu ist ein Gegenverriegelungselement 9 gemäß Figur 6b notwendig, welches als Bügel ausgebildet ist und im gezeigten Verfahrensschritt unterhalb des Verriegelungselementes 65 geschoben wird (siehe Figur 6c). Das Gegenverriegelungselement 9 kann zusätzlich Rastelemente aufweisen, die ein Lösen des Gegenverriegelungselementes 9 verhindern. Gemäß Figur 6c weist der Träger 40 ein weiteres nicht explizit dargestelltes Verriegelungselement auf, das der gegenüberliegenden Seite zum Verriegelungselement 65 liegt. Gemäß Figur 6c ist die Montage der erfindungsgemäßen Vorrichtung abgeschlossen.

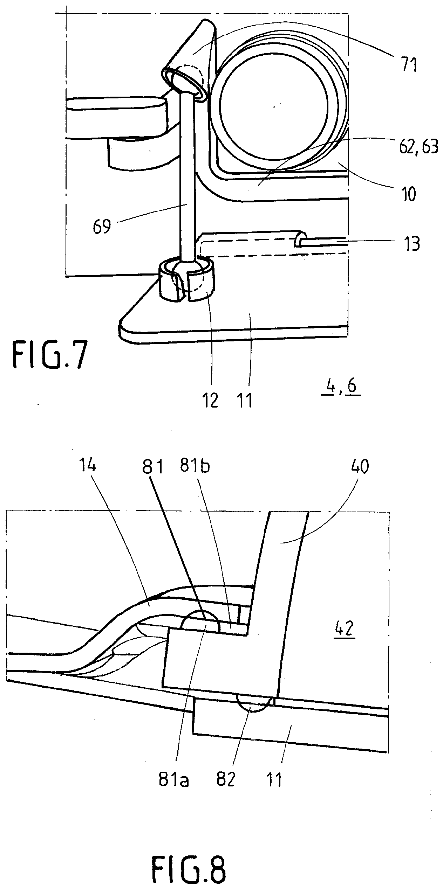

In Figur 8 wird verdeutlicht, dass die Kameraeinheit 10 durch zwei Dichtungsebenen 81, 82 vom Außenbereich 4 des Fahrzeugs abgedichtet ist. Hierbei weist die erfindungsgemäße Vorrichtung eine erste Dichtungsebene 81 auf, die zwischen dem Träger 40 und dem Fahrzeug, insbesondere dem Fahrzeugblech liegt. Die erste Dichtungsebene 81 ist gemäß dieses Ausführungsbeispiels mit einer Doppeldichtung 81a,b ausgeführt. Eine Dichtung 81a ist am Träger 40 angeordnet. Direkt benachbart zu der Dichtung 81a ist eine zweite Dichtung 81b vorgesehen, die am Fahrzeugblech 14 angeordnet ist. Die zweite Dichtungsebene 82 liegt zwischen dem Deckelelement 11 und dem Träger 40. Die Dichtungen der ersten und der zweiten Dichtungsebene 81, 82 sind vorzugsweise am Träger 40 bzw. am Fahrzeugblech 14 angespritzt. Über diese Doppeldichtung 81a,b wird zuverlässig eine Abdichtung des Innenraumes 42 erreicht.

In Figur 1 und Figur 2 ist verdeutlicht, dass die Kameraeinheit 10 auf einer Kreissegmentbahn 15 zwischen der Ruheposition 2a und der Betriebsposition 3a bewegt wird. Hierbei verläuft die Kreissegmentbahn 15 zumindest teilweise um die Bedieneinheit 30. Somit wird eine kompakte Gesamtkonstruktion erreicht.

Wie insbesondere Figur 6b zeigt, ist die Drehachse 61, um die der Schwenkarm 62 sowie die Kameraeinheit 10 bewegbar ist, schräg zur Standfläche 16 des Fahrzeugs ausgerichtet. Eine derartige Kinematik bewirkt, dass die Kameraeinheit 10 lediglich einen geringen Verschwenkweg zwischen der Ruheposition 2a und der Betriebsposition 3a ausführt.

Die Figur 5 zeigt eine weitere Besonderheit des Mechanismus 60, der zwischen dem Antrieb 20 und der Kameraeinheit 10 angeordnet ist. In der Ruheposition 2a der Kameraeinheit 10 befindet sich das Koppelelement 66 über seinem Totpunkt, das bedeutet, dass der Totpunkt überschritten ist. Gleichzeitig befindet sich der Schwenkarm 62 an einem Anschlag 17. Der Mitnehmer 67 ist des Weiteren mit einer Einschnürung 72 ausgeführt, die in Figur 3 und Figur 4 gezeigt ist. Hierdurch wird das Deckelelement 11 in einer stabilen Schließstellung 5 gehalten. Das bedeutet, dass von außen mutwillig ein Öffnen des Deckelelementes 11 wirksam verhindert ist. Dieses begründet sich dadurch, dass das Koppelelement 66 seinen Todpunkt leicht überschritten hat. Wenn nun der Antrieb 20 aktiviert wird, um die Kameraeinheit 10 in Richtung Betriebsposition 3a zu bewegen, erfolgt eine Drehbewegung des Kurbelelementes 68 gegen den Uhrzeigersinn, wobei das Koppelelement 66 - vereinfacht gesprochen - sich nach oben mitbewegt. Da jedoch der Schwenkarm 62 bereits am Anschlag 17 anliegt, kann der Mitnehmer 67 sich nicht um die Achse 61 im Uhrzeigersinn bewegen. Aufgrund der Einschnürung 72 erfolgt eine elastische Verformung des Mitnehmers 67 bis der Totpunkt vom Koppelelement 66 bzw. vom Kurbelelement 68 erreicht ist. Das Kurbelelement 68 bewegt sich weiter gegen den Uhrzeigersinn und nimmt über den Exzenter 68a das Koppelelement 66 weiter mit. Nachdem der Totpunkt überschritten ist, verformt sich der Mitnehmer 67 in seine Ursprungskontur zurück und rotiert gegen den Uhrzeigersinn um die Achse 61. Hierdurch erfolgt eine Kraftübertragung auf den Schwenkarm 62, der die Kameraeinheit 10 in die Betriebsposition 3a gemäß Figur 4 bringt und um die Achse 61 schwenkt.

### Bezugszeichenliste

- 1: Heckklappe
- 2: Ruhemodus
- 2a: Ruheposition
- 3: Betriebsmodus
- 3a: Betriebsposition
- 4: Außenbereich
- 5: Schließstellung
- 6: Offenstellung
- 7: Ver- und Entriegelungseinheit, Schloss
- 8: Öffnung der Heckklappe
- 9: Gegenverriegelungselement

- 10: Kameraeinheit
- 11: Deckelelement
- 12: Kalotte des Deckelelementes
- 13: Lagerwelle
- 14: Fahrzeugblech
- 15: Kreissegmentbahn
- 16: Standfläche
- 17: Anschlag

- 20: Antrieb

- 30: Bedieneinheit

- 40: Träger
- 41: Befestigungsschnittstelle
- 41a: erste Befestigungsschnittstelle
- 41b: zweite Befestigungsschnittstelle
- 43: Öffnung
- 44: Öffnung
- 45: Öffnung
- 46: Deckel
- 47: Deckel
- 48: Durchbruch
- 49: Gummielement, Tülle

- 60: Mechanismus
- 61: Achse
- 62: Schwenkarm
- 63: Aufnahme, Öffnung
- 64: Befestigungsmittel, Rastelement
- 65: Verriegelungselement
- 66: Koppelelement
- 67: Mitnehmer
- 68: Kurbelelement
- 68a: Exzenter
- 69: Stabelement

- 70: Öffnung
- 71: Kalotte
- 72: Einschnürung

- 81: erste Dichtungsebene
- 81a,b: Doppeldichtung
- 82: zweite Dichtungsebene

## Patentansprüche

1. Vorrichtung einer Heckklappe (1) für ein Fahrzeug, mit
einer Kameraeinheit (10), die zur Bilderfassung des Außenbereiches (4) eines Fahrzeuges dient,
einem Antrieb (20), wodurch die Kameraeinheit (10) zwischen einem Ruhemodus (2) und einem Betriebsmodus (3) überführbar ist, wobei
in dem Ruhemodus (2) die Kameraeinheit (10) über ein Deckelelement (11) geschützt vom Außenbereich (4) ist,
in dem Betriebsmodus (3) eine Bilderfassung durch die Kameraeinheit (10) durchführbar ist,
eine Bedieneinheit (30) vorgesehen ist, die zur Bedienung eines Fahrzeugteils dient,
ein Träger (40) vorgesehen ist, in dem die Kameraeinheit (10) angeordnet ist und der gleichzeitig als Gehäuse für die Kameraeinheit (10) wirkt,
der Träger (40) derartige Befestigungsschnittstellen (41) aufweist, dass der Antrieb (20) und die Bedieneinheit (30) am Träger (40) zuverlässig gehalten sind und eine gemeinsame Montagebaugruppe bilden, die am Fahrzeug befestigbar ist, wobei
der Antrieb (20) mit einem Mechanismus zusammenwirkt, der in Wirkverbindung mit der Kameraeinheit (10) und/oder dem Deckelelement (11) steht,
der Mechanismus eine Achse (61) aufweist, um die die Kameraeinheit (10) bewegbar ist, wobei im befestigten Zustand der Vorrichtung an der Heckklappe (1) die Achse (61) schräg zur Standfläche (16) des Fahrzeuges ausgerichtet ist.

2. Vorrichtung nach Anspruch 1,
**dadurch gekennzeichnet,**
**dass** der Antrieb (20) mit der Kameraeinheit (10) derart in Wirkverbindung steht, dass die Kameraeinheit (10) zwischen einer Ruheposition (2a), in der sich die Kameraeinheit (10) in dem Ruhemodus (2) befindet, und einer Betriebsposition (3a) bewegbar ist, in der sich die Kameraeinheit (10) im Betriebsmodus (3) befindet.

3. Vorrichtung nach Anspruch 1 oder 2,
**dadurch gekennzeichnet,**
**dass** das Deckelelement (11) im Ruhemodus (2) der Kameraeinheit (10) sich in einer Schließstellung (5) befindet und in dem Betriebsmodus (3) der Kameraeinheit (10) sich in einer Offenstellung (6) befindet.

4. Vorrichtung nach einem der vorhergehenden Ansprüche,
**dadurch gekennzeichnet,**
**dass** die Bedieneinheit (30) ein vom Außenbereich (4) des Fahrzeugs betätigbarer Taster ist, der insbesondere mit einer Ver- und Entriegelungseinheit (7) der Heckklappe (1) des Fahrzeugs verbunden ist.

5. Vorrichtung nach einem der vorhergehenden Ansprüche,
**dadurch gekennzeichnet,**
**dass** der Mechanismus derart ausgeführt ist, dass die Kameraeinheit (10) auf einer Kreissegmentbahn (15) zwischen der Ruheposition (2a) und der Betriebsposition (3a) bewegbar ist, wobei die Kreissegmentbahn (15) zumindest teilweise um die Bedieneinheit (30) verläuft.

6. Vorrichtung nach einem der vorhergehenden Ansprüche,
**dadurch gekennzeichnet,**
**dass** die Befestigungsschnittstellen (41) an der Außenkontur des Trägers (40) vorgesehen sind.

7. Vorrichtung nach einem der vorhergehenden Ansprüche,
**dadurch gekennzeichnet,**
**dass** der Antrieb (20) und/oder die Bedieneinheit (30) kraftschlüssig und/oder formschlüssig, insbesondere über eine Rastverbindung und/oder Clipsverbindung am Träger (40) befestigt sind.

8. Vorrichtung nach einem der vorhergehenden Ansprüche,
**dadurch gekennzeichnet,**
**dass** der Mechanismus zumindest teilweise innerhalb des Trägers (40) angeordnet ist und/oder dass der Mechanismus einen Schwenkarm (62) aufweist, der die Kameraeinheit (10) mit der Achse (61) verbindet, wobei insbesondere der Schwenkarm (62) L-artig ist und/oder eine abgewinkelte Erstreckung aufweist.

9. Vorrichtung nach Anspruch 8,
**dadurch gekennzeichnet,**
**dass** der Schwenkarm (62) eine Aufnahme (63) für die Kameraeinheit (10) aufweist und/oder Befestigungsmittel (64) aufweist, um die Kameraeinheit (10) am Schwenkarm (62) zu fixieren.

10. Vorrichtung nach Anspruch 8 oder 9,
**dadurch gekennzeichnet,**
**dass** die Aufnahme (63) und das Befestigungsmittel (64) mit dem Schwenkarm (62) ein gemeinsames monolithisches Bauteil bilden, wobei insbesondere die Aufnahme (63) eine ringartige Öffnung (63) ist, durch die sich zum Teil die Kameraeinheit (10) erstreckt und das Befestigungsmittel (64) ein Rastelement (64) ist, das die Kameraeinheit (10) zuverlässig in der Öffnung (63) hält.

11. Vorrichtung nach einem der vorhergehenden Ansprüche,
**dadurch gekennzeichnet,**
**dass** der Mechanismus ein Koppelelement (66) mit einem daran angelenkten Mitnehmer (67) aufweist, der drehfest mit dem Schwenkarm (62) verbunden ist, wobei das Koppelelement (66) durch den Antrieb (20) bewegbar ist wobei zwischen dem Koppelelement (66) und dem Antrieb (20) ein Kurbelelement (68) mit einem Exzenter (68a) angeordnet ist, der am Koppelelement (66) angreift.

12. Vorrichtung nach einem der vorhergehenden Ansprüche,
**dadurch gekennzeichnet,**
**dass** ein Teil des Mechanismus innerhalb des Trägers (40) angeordnet ist, insbesondere der Schwenkarm (62) innerhalb des Trägers (40) bewegbar angeordnet ist, und/oder dass ein Teil des Mechanismus außerhalb des Trägers (40) angeordnet ist, insbesondere dass das Koppelelement (66) und/oder der Mitnehmer (67) und/oder das Kurbelelement (68) sich außerhalb des Trägers (40) befinden.

13. Vorrichtung nach einem der vorhergehenden Ansprüche,
**dadurch gekennzeichnet,**
**dass** ein Stabelement (69) das Deckelelement (11) mit dem Schwenkarm (62) und/oder mit der Kameraeinheit (10) verbindet, wobei das Stabelement (69) am Deckelelement (11) sowie am Schwenkarm (62) und/oder an der Kameraeinheit (10) beweglich angelenkt ist.

14. Vorrichtung nach einem der vorhergehenden Ansprüche,
**dadurch gekennzeichnet,**
**dass** die Kameraeinheit (10) von der Ruheposition (2a) in die Betriebsposition (3a) um einen Winkel α um die Achse (61) verschwenkt, der geringer als 30° ist, vorzugsweise geringer ist als 20°.

15. Vorrichtung nach einem der vorhergehenden Ansprüche,
**dadurch gekennzeichnet,**
**dass** der Träger (40) außenseitig Verriegelungselemente (65) aufweist, die zur Sicherung der Montagebaugruppe am Fahrzeug dient.

16. Vorrichtung nach einem der vorhergehenden Ansprüche,
**dadurch gekennzeichnet,**
**dass** die Kameraeinheit (10) durch zwei Dichtungsebenen (81,82) vom Außenbereich (4) des Fahrzeugs abgedichtet ist, wobei eine erste Dichtungsebene (81) zwischen dem Träger (40) und dem Fahrzeug, insbesondere dem Fahrzeugblech (14) liegt und eine zweite Dichtungsebene (82) zwischen dem Deckelement (11) und dem Träger (40) liegt, wobei insbesondere die erste Dichtungsebene (81) eine Doppeldichtung (81a,b) aufweist.

17. Verfahren zur Befestigung folgender Bauteile an einer Heckklappe (1) eines Fahrzeuges:
eine Kameraeinheit (10), die zur Bilderfassung des Außenbereiches (4) eines Fahrzeuges dient,
ein Antrieb (20), wodurch die Kameraeinheit (10) zwischen einem Ruhemodus (2) und
einem Betriebsmodus (3) überführbar ist, wobei
in dem Ruhemodus (2) die Kameraeinheit (10) über ein Deckelelement (11) geschützt vom Außenbereich (4) ist,
in dem Betriebsmodus (3) eine Bilderfassung durch die Kameraeinheit (10) durchführbar ist,
eine Bedieneinheit (30), die zur Bedienung eines Fahrzeugteils (7) dient, wobei
(1) ein Träger (40) vorgesehen ist, an den die Kameraeinheit (10), der Antrieb (20), das Deckelelement (11) und die Bedieneinheit (30) befestigt werden und eine vorkonfektionierte Montagebaugruppe bilden,
(2) die Montagebaugruppe vom Außenbereich (4) des Fahrzeuges durch eine Öffnung (8) des Fahrzeuges in die zu montierende Stellung innerhalb des Fahrzeuges geführt wird,
(3) über eine mechanische Sicherung der zuverlässige Halt der Montagebaugruppe erzielt wird, wobei die Montagegruppe über ein Verriegelungselement (65), welches vorsprungartig am Träger (40) außenseitig angeordnet ist, sicher an der Heckklappe (1) fixiert wird, und ein Gegenverriegelungselement (9), das als Bügel ausgebildet ist, unterhalb des Verriegelungselement (65) geschoben wird.

18. Verfahren nach Anspruch 17, zur Befestigung einer Vorrichtung gemäß einem der vorhergehenden Ansprüche 1 bis 16.

## Claims

1. A device, particularly for a rear hatch (1) of a vehicle, having a camera device (10) which serves the purpose of capturing an image of the outside area (4) of a vehicle, having a drive (20) by means of which it is possible to transition the camera device (10) between a standby mode (2) and an operating mode (3), wherein in the standby mode (2), the camera device (10) is protected from the outside area (4) via a cover element (11), in the operating mode (3) it is possible for the camera device (10) to capture an image, an operating device (30) is included which serves the purpose of operating a vehicle component, a support (40) is included in which the camera device (10) is arranged and which simultaneously functions as the housing for the camera device (10), the support (40) has attachment interfaces (41) such that the drive (20) and the operating device (30) are reliably held on the support (40), and form a unified installation assembly which can be attached on the vehicle, wherein the drive (20) works together with a mechanism which has a functional connection to the camera device (10) and/or the cover element (11), the mechanism has an axis (61) about which the camera device (10) can move, wherein particularly the axis (61) is oriented obliquely to the platform (16) of the vehicle in the fixed state of the device.

2. A device according to claim 1,
**characterized in that**
the drive (20) has a functional connection to the camera device (10) in such a manner that the camera device (10) can be moved between a standby position (2a) in which the camera device (10) is in the standby mode (2), and an operating position (3a) in which the camera device (10) is in the operating mode (3).

3. A device according to claim 1 or 2,
**characterized in that**
the cover element (11) is in a closed position (5) when the camera device (10) is in the standby mode (2), and is in an open position (6) when the camera device (10) is in the operating mode (3).

4. A device according to one of the previous claims,
**characterized in that**
the operating device (30) is a button which can be actuated from the outside area (4) of the vehicle, and which is particularly connected to a locking and unlocking device (7) of the rear hatch (1) of the vehicle.

5. A device according to one of the previous claims,
**characterized in that**
the mechanism is designed in such a manner that the camera device (10) can move on a path of a circular segment (15) between the standby position (2a) and the operating position (3a), wherein the path of a circular segment (15) runs at least partially around the operating device (30).

6. A device according to one of the previous claims,
**characterized in that**
the attachment interfaces (41) are included on the outer contour of the support (40).

7. A device according to one of the previous claims,
**characterized in that**
the drive (20) and/or the operating device (30) are attached on the support (40) in a force-fitting and/or positive-fitting manner, particularly via a snap-in connection and/or clip connection.

8. A device according to one of the previous claims,
**characterized in that**
the mechanism is arranged at least partially inside of the support (40) and/or that the mechanism has a pivot arm (62) which connects the camera device (10) to the axis (61), wherein the pivot arm (62) is particularly L-shaped, and/or has an extension which runs at an angle thereto.

9. A device according to claim 8,
**characterized in that**
the pivot arm (62) has a recess (63) for the camera device (10), and/or has attachment means (64), in order to fix the camera device (10) on the pivot arm (62).

10. A device according to claim 8 or 9,
**characterized in that**
the recess (63) and the attachment means (64) form a unified monolithic component together with the pivot arm (62), wherein the recess (63) is particularly a ring-shaped opening (63) through which the camera device (10) partially extends, and the attachment means (64) is a locking element (64) which reliably holds the camera device (10) in the opening (63).

11. A device according to one of the previous claims,
**characterized in that**
the mechanism has a coupling element (66) with a driving dog (67) hinged onto the same and connected to the pivot arm (62) in a torque-proof manner, wherein the coupling element (66) can be moved by the drive (20), wherein a crank element (68) with an eccentric (68a) is arranged between the coupling element (66) and the drive (20), and said eccentric (68a) engages with the coupling element (66).

12. A device according to one of the previous claims,
**characterized in that**
a part of the mechanism is arranged inside the support (40), and particularly the pivot arm (62) is arranged inside the support (40) and is able to move and/or a part of the mechanism is arranged outside of the support (40), and particularly in that the coupling element (66) and/or the driving dog (67) and/or the crank element (68) is/are positioned outside the support (40).

13. A device according to one of the previous claims,
**characterized in that**
a rod element (69) connects the cover element (11) to the pivot arm (62) and/or to the camera device (10), wherein the rod element (69) is movably hinged on the cover element (11) as well as on the pivot arm (62) and/or on the camera device (10).

14. A device according to one of the previous claims,
**characterized in that**
the camera device (10) pivots about the axis (61) from the standby position (2a) into the operating position (3a) at an angle α which is less than 30°, and preferably is less than 20°.

15. A device according to one of the previous claims,
**characterized in that**
the support (40) has locking elements (65) on the outside thereof which serve the purpose of securing the installation assembly on the vehicle.

16. A device according to one of the previous claims,
**characterized in that**
the camera device (10) is sealed from the outside area (4) of the vehicle by two seal planes (81, 82). wherein a first seal plane (81) lies between the support (40) and the vehicle - particularly the vehicle body panel (14) - and a second seal plane (82) lies between the cover element (11) and the support (40), wherein particularly the first seal plane (81) has a double seal (81a, b).

17. method for the attachment of the following components on a vehicle,
on a rear hatch (1) of a vehicle:
a camera device (10) which functions to capture images of the outside area (4) of a vehicle, a drive (20), by means of which the camera device (10) can be transitioned between a standby mode (2) and an operating mode (3), wherein in the standby mode (2) the camera device (10) is protected via a cover element (11) from the outside area (4), and in the operating mode (3) it is possible for the camera device (10) to capture an image, an operating device (30) which serves the purpose of operating a vehicle component (7), wherein (1) a support (40) is included on which the camera device (10), the drive (20), the cover element (11), and the operating device (30) are attached, and form a prefabricated installation assembly, (2) the installation assembly is guided from the outside area (4) of the vehicle through an opening (8) of the vehicle and into the installation position inside the vehicle, and (3) the reliable hold of the installation assembly is achieved by a mechanical securement, wherein the prefabricated installation body is fixed securely on the rear hatch (1) via a locking element (65), which is arranged projection-like at the support externally, and an opposing locking element, which is formed as a stirrup, is pushed below the locking element (65).

18. A method according to claim 17, for the purpose of attaching a device according to one of the previous claims 1 to 16.

## Revendications

1. Dispositif d'un hayon (1) pour un véhicule, avec
une unité caméra (10), qui sert à capturer des images de la région extérieure (4) d'un véhicule,
un entraînement (20), qui permet de faire passer l'unité caméra (10) d'un mode de repos (2) dans un mode de fonctionnement (3) et inversement, sachant
que dans le mode de repos (2), l'unité caméra (10) est protégée de la région extérieure (4) par l'intermédiaire d'un élément de recouvrement (11),
que dans le mode de fonctionnement (3), une capture d'image peut être effectuée par l'unité caméra (10),
qu'il est prévu une unité de commande (30), qui sert à commander un élément du véhicule,
qu'il est prévu un support (40), dans lequel est disposée l'unité caméra (10) et qui sert en même temps de boîtier pour l'unité caméra (10),
que le support (40) présente des interfaces de fixation (41) telles que l'entraînement (20) et l'unité de commande (30) sont maintenus de manière fiable sur le support (40) et forment un ensemble de montage commun qui peut être fixé sur le véhicule, sachant
que l'entraînement (20) coopère avec un mécanisme qui se trouve en liaison fonctionnelle avec l'unité caméra (10) et/ou l'élément de recouvrement (11),
que le mécanisme présente un axe (61) autour duquel l'unité caméra (10) peut être déplacée, sachant que dans l'état fixé du dispositif sur le hayon (1), l'axe (61) est orienté en oblique par rapport à la surface d'appui (16) du véhicule.

2. Dispositif selon la revendication 1, **caractérisé en ce que** l'entraînement (20) se trouve en liaison fonctionnelle avec l'unité caméra (10) de telle sorte que l'unité caméra (10) peut être déplacée entre une position de repos (2a), dans laquelle l'unité caméra (10) se trouve dans le mode de repos (2), et une position de fonctionnement (3a) dans laquelle l'unité caméra (10) se trouve dans le mode de fonctionnement (3).

3. Dispositif selon la revendication 1 ou 2, **caractérisé en ce que** l'élément de recouvrement (11) se trouve dans une position fermée (5) dans le mode de repos (2) de l'unité caméra (10) et se trouve dans une position ouverte (6) dans le mode de fonctionnement (3) de l'unité caméra (10).

4. Dispositif selon l'une des revendications précédentes, **caractérisé en ce que** l'unité de commande (30) est un bouton qui peut être actionné depuis la région extérieure (4) du véhicule et qui est en particulier relié à une unité (7) de verrouillage et de déverrouillage du hayon (1) du véhicule.

5. Dispositif selon l'une des revendications précédentes, **caractérisé en ce que** le mécanisme est réalisé de telle sorte que l'unité caméra (10) peut être déplacée sur une trajectoire (15) en segment de cercle entre la position de repos (2a) et la position de fonctionnement (3a), sachant que la trajectoire (15) en segment de cercle s'étend au moins pour partie autour de l'unité de commande (30).

6. Dispositif selon l'une des revendications précédentes, **caractérisé en ce que** les interfaces de fixation (41) sont prévues sur le contour extérieur du support (40).

7. Dispositif selon l'une des revendications précédentes, **caractérisé en ce que** l'entraînement (20) et/ou l'unité de commande (30) sont fixés à force et/ou par complémentarité de forme sur le support (40), en particulier au moyen d'une liaison par enclenchement et/ou d'une liaison par clip.

8. Dispositif selon l'une des revendications précédentes, **caractérisé en ce que** le mécanisme est disposé au moins pour partie à l'intérieur du support (40), et/ou **en ce que** le mécanisme présente un bras pivotant (62) qui relie l'unité caméra (10) à l'axe (61), sachant en particulier que le bras pivotant (62) est en forme de L et/ou présente un développement coudé.

9. Dispositif selon la revendication 8, **caractérisé en ce que** le bras pivotant (62) présente un logement (63) pour l'unité caméra (10), et/ou présente un moyen de fixation (64) afin d'immobiliser l'unité caméra (10) sur le bras pivotant (62).

10. Dispositif selon la revendication 8 ou 9, **caractérisé en ce que** le logement (63) et le moyen de fixation (64) forment avec le bras pivotant (62) un composant monolithique commun, sachant en particulier que le logement (63) est une ouverture annulaire (63) à travers laquelle s'étend pour partie l'unité caméra (10), et que le moyen de fixation (64) est un élément d'enclenchement (64) qui maintient l'unité caméra (10) de manière fiable dans l'ouverture (63).

11. Dispositif selon l'une des revendications précédentes, **caractérisé en ce que** le mécanisme présente un élément d'accouplement (66) sur lequel est articulé un entraîneur (67) qui est lié en rotation au bras pivotant (62), sachant que l'élément d'accouplement (66) peut être déplacé par l'entraînement (20), sachant qu'un élément d'embiellage (68), doté d'un excentrique (68a) qui agit sur l'élément d'accouplement (66), est disposé entre l'élément d'accouplement (66) et l'entraînement (20).

12. Dispositif selon l'une des revendications précédentes, **caractérisé en ce qu'**une partie du mécanisme est disposée à l'intérieur du support (40), en particulier le bras pivotant (62) est disposé avec possibilité de déplacement à l'intérieur du support (40), et/ou **en ce qu'**une partie du mécanisme est disposée à l'extérieur du support (40), en particulier **en ce que** l'élément d'accouplement (66) et/ou l'entraîneur (67) et/ou l'élément d'embiellage (68) se trouvent à l'extérieur du support (40).

13. Dispositif selon l'une des revendications précédentes, **caractérisé en ce qu'**un élément formant tige (69) relie l'élément de recouvrement (11) au bras pivotant (62) et/ou à l'unité caméra (10), sachant que l'élément formant tige (69) est articulé à déplacement sur l'élément de recouvrement (11) ainsi que sur le bras pivotant (62) et/ou sur l'unité caméra (10).

14. Dispositif selon l'une des revendications précédentes, **caractérisé en ce que** l'unité caméra (10), de la position de repos (2a) dans la position de fonctionnement (3a), pivote autour de l'axe (61) d'un angle a qui est inférieur à 30°, de préférence qui est inférieur à 20°.

15. Dispositif selon l'une des revendications précédentes, **caractérisé en ce que** le support (40) présente sur le côté extérieur des éléments de verrouillage (65) qui servent à l'assujettissement de l'ensemble de montage sur le véhicule.

16. Dispositif selon l'une des revendications précédentes, **caractérisé en ce que** l'unité caméra (10) est étanchée par rapport à la région extérieure (4) du véhicule par deux plans d'étanchéité (81, 82), sachant qu'un premier plan d'étanchéité (81) se situe entre le support (40) et le véhicule, en particulier la tôle de véhicule (14), et qu'un deuxième plan d'étanchéité (82) se situe entre l'élément de recouvrement (11) et le support (40), sachant en particulier que le premier plan d'étanchéité (81) présente un double joint d'étanchéité (81a,b).

17. Procédé pour fixer les composants suivants sur un hayon (1) d'un véhicule :
une unité caméra (10), qui sert à capturer des images de la région extérieure (4) d'un véhicule,
un entraînement (20), qui permet de faire passer l'unité caméra (10) d'un mode de repos (2) dans un mode de fonctionnement (3) et inversement, sachant
que dans le mode de repos (2), l'unité caméra (10) est protégée de la région extérieure (4) par l'intermédiaire d'un élément de recouvrement (11),
que dans le mode de fonctionnement (3), une capture d'image peut être effectuée par l'unité caméra (10),
une unité de commande (30), qui sert à commander un élément (7) du véhicule, sachant
(1) qu'il est prévu un support (40), sur lequel l'unité caméra (10), l'entraînement (20), l'élément de recouvrement (11) et l'unité de commande (30) sont fixés et forment un ensemble de montage préfabriqué.
(2) que l'ensemble de montage peut, par une ouverture (8) du véhicule, être dirigé depuis la région extérieure (4) du véhicule dans la position de montage à l'intérieur du véhicule.
(3) qu'on obtient au moyen d'un assujettissement mécanique le maintien fiable de l'ensemble de montage, sachant que l'ensemble de montage est immobilisé de manière sûre sur le hayon (1) par l'intermédiaire d'un élément de verrouillage (65) qui est disposé du côté extérieur sur le support (40) à la manière d'une saillie, et qu'un élément de verrouillage complémentaire (9), qui est réalisé sous la forme d'un étrier, est poussé en dessous de l'élément de verrouillage (65).

18. Procédé selon la revendication 17. pour la fixation d'un dispositif selon l'une des revendications précédentes 1 à 16.
